# EUROPEAN PATENT APPLICATION

(11) **EP 1 736 875 A1**
(43) Date of publication of application: **27.12.2006**
(21) Application number: 05291332.4
(22) Date of filing: 21.06.2005
(51) Int. Cl.: G06F 9/45

(54) **Method of operating a computer system**

(71) Applicant: ALCATEL, 75008 Paris (FR)
(72) Inventor: Schmidt, Hartmut, Dipl.-Ing, 71723 Grossbottwar (DE)
(74) Representative: Schäfer, Wolfgang

(57) **Abstract**

A method of operating a computer system is described. The computer system comprises a virtual machine (VM1), wherein an application program (AP1, AP2) and/or an operating system (OSguest) is running on the virtual machine, and wherein the application program and/or the operating system comprises privileged operations. If a privileged operation is processed by the virtual machine, the privileged operation is replaced by a subroutine call. The computer system comprises an emulation program corresponding to the subroutine call for emulating the replaced privileged operation.

## Description

The invention relates to a method of operating a computer system wherein the computer system comprises a virtual machine, wherein an application program and/or an operating system is running on the virtual machine, and wherein the application program and/or the operating system comprises privileged operations. The invention also relates to a corresponding computer program and to a corresponding computer system.

In the past, a lot of application programs were written that were based on a specific operating system and on a specific hardware platform. For example, numerous application programs exist that are optimized for the Windows 98 operating system and the Intel 386 microprocessor ("Windows" and "Windows 98" are trademarks of Microsoft Corp. and "Intel" and "Intel 386" are trademarks of Intel Corp.).

Due to the general technical development, new or other operating systems and new or other hardware platforms are available today that may be used as host operating systems and host hardware platforms for the existing application programs and/or for the existing operating system.

If e.g. the host hardware platform is compatible to an existing application program, then one possibility is to run the existing application program without any change on the host hardware platform. However, due to the fact that the application program was optimized for the former specific hardware platform, the available processing power of the host hardware platform often cannot be exploited.

Another possibility is to re-write the existing application program in order to optimally adapt the application program to the host hardware platform. In this case, the available processing power of the host hardware platform may be exploited, however, the re-writing of the application program apparently requires additional efforts.

It is also possible to establish a so-called virtual machine. In this case, a software product is running on the host operating system that emulates the former hardware platform. Examples of such emulation software products are "VMWare" or "UMLinux" or "WINE" or the like.

The virtual machine may then be used in the same way as the former hardware platform. Consequently, it is possible to run the existing application program together with the existing operating system on the virtual machine. As a result, no adaptation of the existing application program is necessary. And in addition, a number of virtual machines may be implemented on the host hardware platform so that the processing power of the host hardware platform can be exploited.

However, if an existing application program or an existing operating system comprises privileged operations, in particular privileged instructions, for example interrupt instructions, it is known that these instructions lead to exceptional states of the host hardware platform. These exceptional states then have to be processed within the corresponding virtual machine and the host operating system. In particular, specific interrupt emulation programs are provided in order to process these privileged instructions. It has been shown that the processing power of the host hardware platform is degraded by a factor up to 70 % due to these exceptional states.

It is an object of the present invention to provide a method of operating a computer system that avoids the above disadvantages. In particular, it is an object of the invention to decrease the described degradation of the processing power of the host hardware platform due to exceptional states.

The invention solves this object by a method of operating a computer system according to claim 1. The object is also solved by a corresponding computer program and by a corresponding computer system.

According to the invention, a specific procedure is carried out if a privileged operation is processed by the virtual machine. In particular, the privileged operation is replaced by a subroutine call. In addition, according to the invention, the computer system comprises an emulation program corresponding to the subroutine call for emulating the replaced privileged operation.

These features have the consequence that the degradation of the processing power of the host hardware platform only happens once, i.e. if the privileged operation is carried out for the first time. However, as the privileged operation is replaced by a subroutine call, the degradation cannot happen at a second occasion. Instead, at this second time, the privileged operation is not present anymore so that no exceptional state occurs. The virtual machine can then carry out the subroutine call with almost no degradation of the processing power.

The invention, therefore, provides a method of operating a computer system that allows, on one hand, to use existing application programs without any adaptation, and that offers, on the other hand, the possibility to exploit the processing power of the computer system with only little degradation due to exceptional states.

In an advantageous embodiment of the invention, the method provides the step that, prior to any other steps, additional instructions are introduced into the existing operating system after the privileged operation wherein these additional instructions have a function of a placeholder or wildcard character. This feature opens the possibility that privileged operations can be replaced at a later point in time.

In particular, the number of additional instructions is selected such that the privileged operation may, at the later point in time, be replaced by the subroutine call.

Further features, applications, and advantages of the invention will become apparent from the following description of exemplary embodiments of the invention that are shown in the drawings. There, all described and shown features separately or in any combination represent the subject matter of the invention, independently of the wording in the description or the representation in the drawings and independently of the combination in the claims or the dependencies of the claims.

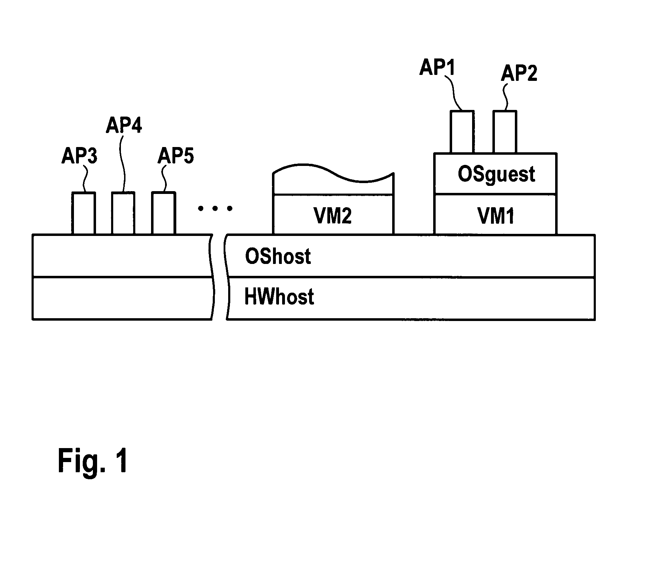

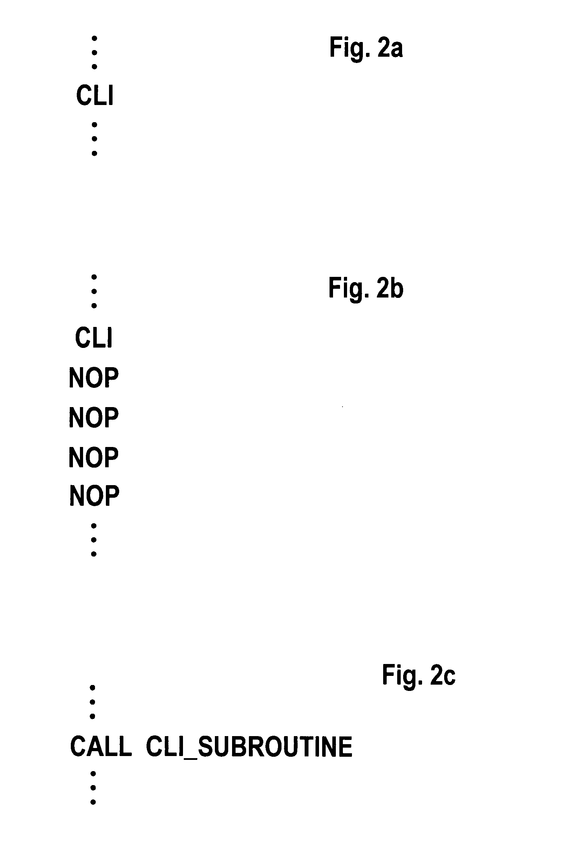

Figure 1 shows a schematic block diagram of a hardware and software configuration of a computer system, and figures 2a to 2c show exemplary instructions according to an embodiment of the invention.

In figure 1, a host hardware platform HWhost constitutes the basis of a computer system. This host hardware platform HWhost could be, for example, an Intel Pentium microprocessor ("Intel" and "Pentium" are trademarks of Intel Corp.). On this host hardware platform HWhost, a host operating system OShost is running. For example, the host operating system OShost could be a Linux operating system.

Based on the host operating system OShost, a first virtual machine VM1 is established. This virtual machine VM1 constitutes an emulation of a guest hardware platform HWguest. For example, the virtual machine VM1 is adapted to emulate an Intel 386 microprocessor ("Intel" and "Intel 386" are trademarks of Intel Corp.).

On this guest hardware platform HWguest, a guest operating system OSguest is running. For example, the guest operating system OSguest could be a Windows 98 operating system ("Windows" and "Windows 98" are trademarks of Microsoft Corp.).

Finally, one or more application programs AP1, AP2 are running on the guest operating system OSguest and the guest hardware platform HWguest.

In addition to the first virtual machine VM1, a second virtual machine VM2 may also be present. On the second virtual machine VM2, a further or another guest hardware platform may be emulated.

Furthermore, further application programs AP3, AP4, AP5 are present. These application programs AP3, AP4, AP5 are directly based on the host operating system OShost.

The application programs AP1, AP2, AP3, AP4, AP5 correspond to one and the same software application. In particular, the application programs AP1, AP2 were written in the past based on the guest operating system OSguest and the guest hardware platform HWguest whereas the application programs AP3, AP4, AP5 were written at present based on the host operating system OShost and the host hardware platform HWhost.

The application programs AP1, AP2 run together with the guest operating system OSguest on the guest hardware platform HWguest that is emulated by the virtual machine VM1. Instructions coming from the application programs AP1, AP2 are processed by the guest operating system OSguest and are forwarded to the virtual machine VM1. There, a conversion is carried out into corresponding instructions for the host operating system OShost and the host hardware platform HWhost. Then, these converted instructions are processed by the host operating system OShost and the host hardware platform HWhost. Any results from these converted instructions are transferred from the host operating system OShost and the host hardware platform HWhost to the virtual machine VM1. There, these results are re-converted and transferred back to the guest operating system OSguest and the application programs AP1, AP2.

In alternative embodiment (not shown), it is also possible that the guest operating system OSguest is not present. In this case, the virtual machine VM1 comprises program code to emulate instructions. Then, all instructions coming from the application programs AP1, AP2 are directly forwarded to the virtual machine VM1 and are processed there.

The application programs AP3, AP4, AP5 run together with the host operating system OShost on the host hardware platform HWhost. Therefore, no emulation or the like is necessary.

With the above-described procedures, the application programs AP1, AP2 are running on the emulated guest hardware platform HWguest without any changes. Furthermore, the application programs AP3, AP4, AP5 are running together with the host operating system OShost on the host hardware platform HWhost. And in addition, the application programs AP1, AP2 may cooperate with the application programs AP3, AP4, AP5 wherein any communication is carried out via the host operating system OShost.

Any operating system or application program may comprise a privileged operation. In particular, any operating system or application program may comprise a privileged instruction. For example, any instruction related to an interrupt is usually a privileged instruction. As well, any instruction that e.g. modifies a descriptor table is usually a privileged instruction.

In the following, a privileged instruction is used as a possible example. However, the following description may also be applied to any other possible privileged operation.

If one of the application programs AP1, AP2 or the guest operating system OSguest comprises a privileged instruction, the following procedures are carried out.

According to figure 2a, it is assumed that one of the application programs AP1, AP2 or the guest operating system OSguest comprises an interrupt instruction "CLI" as a privileged instruction. This interrupt instruction has the meaning that a specific interrupt flag shall be cleared or disabled.

Furthermore, it is assumed that prior to any processing, the application programs AP1, AP2 and the guest operating system OSguest are processed by a code generator, e.g. an assembler or a compiler. This code generator generates the code of the application programs AP1, AP2 or the guest operating system OSguest. If a privileged instruction is present, any one of these privileged instructions is adapted as described below.

In the present example, the interrupt instruction "CLI" is present. Then, the code generator adds additional instructions after the privileged instruction. The only purpose of any one of these additional instructions is to serve as a kind of placeholder or wildcard character.

The result of these additions is shown in figure 2b. There, the interrupt instruction "CLI" is followed by four so-called no-operation instructions "NOP". Any one of these "NOP" instructions does not have any influence on the application programs AP1, AP2 or the guest operating system OSguest. In particular, the "NOP" instructions do not have any consequence on the way how the application programs AP1, AP2 or the guest operating system OSguest are processed. However, the "NOP" instructions require additional memory space that must be provided.

In an alternative embodiment, a software tool searches for privileged instructions and then introduces the described "NOP" instructions after these privileged instructions.

It is important to notice that the original "CLI" instruction remains unchanged. This results in the fact that all functions of the original application programs AP1, AP2 or the original guest operating system OSguest also remain unchanged. Insofar, the adapted application programs AP1, AP2 and the adapted guest operating system OSguest comprising the described additional instructions can be used in the same way as the original application programs AP1, AP2 and the original guest operating system OSguest. In particular, the application programs AP1, AP2 and the guest operating system OSguest with the additional "NOP" instructions can also run directly on a hardware platform, i.e. without any emulation by the virtual machine VM1.

As already described, the interrupt instruction "CLI" has the meaning that a specific interrupt flag shall be cleared.

If the guest operating system OSguest would not be emulated but would directly run on a hardware platform, the interrupt flag would be stored in a register of the central processing unit (CPU) of this hardware platform. As a consequence, the interrupt instruction "CLI" would directly access this register within the CPU of the hardware platform.

The fact that the guest operating system OSguest runs on the virtual machine VM1 that only emulates the mentioned hardware platform, has the consequence that the interrupt instruction "CLI" tries to directly access a corresponding register within the CPU of the host hardware platform HWhost. However, by definition, only the host operating system OShost is allowed to access registers of the CPU of the host hardware platform HWhost. As a result, the fact that the guest operating system OSguest tries to access a register of the CPU of the host hardware platform HWhost leads to an exceptional state within the host hardware platform HWhost.

This exceptional state is resolved by the host hardware platform HWhost by forwarding a corresponding message to the virtual machine VM1. The virtual machine VM1 then carries out an interrupt emulation program that emulates the interrupt instruction "CLI" by storing a marker or the like which represents the specific interrupt flag within the virtual machine VM1. This marker can then be used by the virtual machine VM1 for controlling the admittance or non-admittance of interrupts.

Furthermore, the afore-mentioned interrupt emulation program carries out a replacement function during which that privileged instruction that has invoked the interrupt emulation program, is replaced by a corresponding subroutine call. In the present example, the "CLI" instruction has invoked the exceptional state and the interrupt emulation program and therefore the "CLI" instruction is replaced by a "CALL CLI_SUBROUTINE" instruction.

In the present example, the "CALL CLI_SUBROUTINE" instruction requires more memory space than the "CLI" instruction. The mentioned interrupt emulation program, therefore, uses the added "NOP" instructions in order to carry out the replacement. As a result, not only the "CLI" instruction, but also one or more of the four "NOP" instructions are replaced by the "CALL CLI_SUBROUTINE" instruction.

The result of this replacement is shown in figure 2c. It is possible that the "CALL CLI_SUBROUTINE" instruction shown in figure 2c is followed by one or more remaining "NOP" instructions.

Then, after having resolved the exceptional state of the host hardware platform HWhost and after having replaced the privileged instruction by a corresponding subroutine call, the respective application programs AP1, AP2 or the guest operating system OSguest continues with its subsequent instructions. If there are further privileged instructions, the same procedures are carried out again, i.e. the un-allowed access to the registers of the CPU of the host hardware platform HWhost results in an interrupt emulation program corresponding to the respective privileged instruction and in a replacement of the privileged instruction by a corresponding subroutine call.

If, now, at a later point in time, the application programs AP1, AP2 or the guest operating system OSguest returns to the location of the former "CLI" instruction, this "CLI" instruction is not present anymore. Therefore, no un-allowed access will be carried out by the application program AP1, AP2 or the guest operating system OSguest. As a consequence, the host hardware platform HWhost will not enter an exceptional state.

Instead, the "CALL CLI_SUBROUTINE" instruction will be present at the location of the former "CLI" instruction. Therefore, the guest operating system OSguest will carry out this "CALL CLI_SUBROUTINE" instruction.

The "CALL CLI_SUBROUTINE" instruction may be realized as a separate piece of software comprised in the virtual machine VM1. However, the "CALL CLI_SUBROUTINE" instruction may also be realized as a part of the interrupt emulation program that was already described and that resolved the corresponding exceptional state of the host hardware platform HWhost. Independently of its realization, the "CALL CLI_SUBROUTINE" instruction results in an emulation of the "CLI" instruction and stores the mentioned marker.

This means that - if the guest operating system OSguest - returns to the location of the former "CLI" instruction, the same or at least a similar emulation is carried out as the first time. However, due to the "CALL CLI_SUBROUTINE" instruction, an exceptional state of the host hardware platform HWhost is avoided. Instead, the emulation of the "CLI" instruction is carried out at once without any intervening exceptional state of the host hardware platform HWhost.

The described procedures is particularly advantageous in connection with a network switch, in particular within a computer system for operating a network switch. In this case, an existing operating system together with all existing application programs that are optimized for this existing operating system, can be re-used in connection with a host hardware platform. In addition, host application programs can be added that may then be based directly on the host hardware platform. Due to the invention, the existing application programs and the existing operating system can be processed by a virtual machine with almost no degradation due to exceptional states that are usually invoked by any privileged instruction.

## Claims

1. A method of operating a computer system wherein the computer system comprises a virtual machine (VM1),
wherein an application program (AP1, AP2) and/or an operating system (OSguest) is running on the virtual machine, and wherein the application program and/or the operating system comprises privileged operations ("CLI"), **characterized in that**, if a privileged operation is processed by the virtual machine, the privileged operation is replaced by a subroutine call ("CALL CLI_SUBROUTINE"), wherein the computer system comprises an emulation program corresponding to the subroutine call for emulating the replaced privileged operation.

2. The method of claim 1 wherein, if the subroutine call is processed by the virtual machine, the emulation program is carried out by the virtual machine.

3. The method of claim 1 wherein the processing of the privileged operation leads to an exceptional state of the computer system, and wherein the exceptional state is resolved by the virtual machine.

4. The method of claim 3 wherein, if the privileged operation is processed by the virtual machine, the virtual machine emulates the privileged operation in order to resolve the exceptional state.

5. The method of claim 1 wherein, prior to any other steps, additional instructions ("NOP") are introduced into the application program and/or the operating system after the privileged operation wherein these additional instructions have a function of a placeholder or wildcard character.

6. The method of claim 5 wherein the privileged operation and the additional instructions are generated by a code generator.

7. The method of claim 5 wherein the number of additional instructions is selected such that the privileged operation may, at a later point in time, be replaced by the subroutine call.

8. A computer program for operating a computer system
wherein the computer system comprises a virtual machine (VM1), wherein an application program (AP1, AP2) and/or an operating system (OSguest) is running on the virtual machine, and wherein the application program and/or the operating system comprises privileged operations ("CLI"), **characterized in that**, if a privileged operation is processed by the virtual machine, the computer program is adapted to replace the privileged operation by a subroutine call ("CALL CLI_SUBROUTINE"), wherein the computer system comprises an emulation program corresponding to the subroutine call for emulating the replaced privileged operation.

9. A computer system comprising a virtual machine (VM1),
wherein an application program (AP1, AP2) and/or an operating system (OSguest) is adapted to run on the virtual machine, and wherein the application program and/or the operating system comprises privileged operations ("CLI"), **characterized in that**, if a privileged operation is processed by the virtual machine, the virtual machine is adapted to replace the privileged operation by a subroutine call ("CALL CLI_SUBROUTINE"), wherein the computer system comprises an emulation program corresponding to the subroutine call for emulating the replaced privileged operation.

10. A network switch comprising a computer system according to claim 9.
